# EUROPEAN PATENT SPECIFICATION

(11) **EP 0 265 490 B1**
(45) Date of publication and mention of the grant of the patent: **18.10.1995**
(21) Application number: 87903059.1
(22) Date of filing: 03.04.1987
(51) Int. Cl.: F16K 49/00, F02G 1/00

(54) **PULSE COMBUSTION ENERGY SYSTEM**
PULSIERENDES VERBRENNUNGSENERGIESYSTEM
SYSTEME D'ENERGIE DE COMBUSTION PULSEE

(30) Priority: 16.04.1986 US 852854
(43) Date of publication of application: 04.05.1988
(73) Proprietor: NEA Technology Transfer Corporation, San Rafael CA 94901 (US)
(72) Inventor: LOCKWOOD, Hanford, N., San Mateo, CA 94403 (US)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)
(86) International application number: PCT/US87/00777
(87) International publication number: WO 87/06321

(56) References cited:
- EP-A- 0 122 665
- WO-A-80/01247
- DE-B- 1 109 822
- DE-B- 1 110 800
- DE-C- 836 067
- FR-A- 903 293
- FR-A- 1 267 897
- US-A- 2 374 569
- US-A- 2 393 887
- US-A- 2 612 749
- US-A- 2 907 382
- US-A- 3 409 382
- US-A- 4 057 908
- US-A- 4 080 149
- US-A- 4 205 931
- US-A- 4 392 509

## Description

### BACKGROUND OF THE INVENTION

This invention relates to a rotary valve according to the preamble of claim 1 as known for example from DE-A-1110800.

Such a valve may be used in drying equipment, and more particularly, in a novel drying apparatus, in which the material to be dried is atomized and dried by a pulsating flow of a stream of hot gases.

The general process known as combustion drying has been in use for many years. The process has been widely used to remove moisture to obtain or recover a solid material which has been in suspension or solution in a fluid. Typically, the fluid is atomized and the resultant spray is subjected to a flow of hot gases from a combustion process such as that available from an air heater or a pulse combustor to evaporate the moisture from the spray. The solid particles are then carried from the drying chamber by the flow of the drying gas and are removed from the gas by means such as a cyclone separator.

There are two types of pulse combustors. The first is the valved type pulse combustor of which the V-1 "Buzz Bomb" engine is the best known example. The second is the air valved pulse combustor which uses the pulse energy to pump its combustion air. The best known example of this type is the air valve engine developed by Mr. Raymond Lockwood and disclosed in many of his patents such as U.S. Patent No. 3,462,955.

An air valved pulse combustor consists of a combustion chamber where the fuel is introduced, a combustion chamber inlet which is a short tube, and a combustion chamber tail pipe which is longer than the combustion chamber inlet. Fuel is pressure atomized in the combustion chamber, and when the proper explosive mixture is reached, a spark plug ignites it for initial starting. The fuel and air explode and burning gas expands out both the inlet tube and the outlet tube. The energy released in the explosion provides thrust or power when the two shock waves exit from the combustion chamber. One shock wave will exit from the short inlet tube of the chamber before the second shock wave can exit from the tail pipe.

In order to impede the flow caused by the shock wave through the short inlet tube of the chamber it has been suggested in the US-2612749 to provide the inlet passage with a low flow resistance for flow in the direction towards a combustion chamber and a relatively high flow resistance for flow in the direction away from the combustion chamber. This may be achieved by means of vortex pockets in that an extremely violent swirling motion will be set up in these pockets by the high velocity reverse flow gases resulting from the explosion in combustion chamber. What reverse flow is not blocked by a first vortex will pass on to a second pocket forming another less violent vortex. The weakened reverse flow then passes to the next pocket, forming another vortex pocket an so on, becoming progressively weaker at each pocket.

The momentum of the combustion products causes a partial vacuum to develop in the combustion chamber, causing a reverse flow in both the inlet and tail pipe. This reverse flow brings a new air charge into the combustion chamber where the air mixes with a new fuel charge and with the hot gas which reversed its flow in the tail pipe. The momentum of the reverse flow causes a slight compression to develop in the combustion chamber and a very vigorous mixing of the fuel, air, and hot combustion products results. Spontaneous ignition of the mixture takes place and the process repeats itself about 100 times per second.

Most pulse combustion systems today use the air valve engine because it is simple to make and has no mechanical moving parts. However, the air valve system uses a substantial percentage of the energy from the combustion process to pump the combustion air required for the succeeding fuel detonations. Even though this system can be made into an efficient thrust producing engine through the addition of thrust augmenters, the energy consumed in pumping the combustion air detracts from the total energy available for the process and reduces the overall system efficiency.

The valved type pulse combustor uses the same combustion principle except that it has a mechanical (reed, flapper, or primitive rotary type) valve on the combustion chamber inlet side which prevents any back. flow of combustion products out of the inlet tube. The valve is closed during the final phase of fuel/air mixing and during the explosion, so all of the combustion products exit through the tail pipe, preceded by the shock wave. However, these valved type systems have experienced limited valve life in the hot environment of the engine inlet since the valve must open and close with each combustion cycle, which can be over 100 times per second.

One such primitive rotary valve is disclosed in DE-AS-1110800.

A further problem with engine life which affects both types of pulse combustors is caused by the corrosive effects of the hot combustion gases. Parts of the system which experience the hottest temperatures deteriorate quickly, necessitating frequent expensive repair and replacement of those parts. Attempts to fabricate such parts from corrosion resistant material, such as high quality stainless steel or inconel, have been unsuccessful because the parts have failed due to mechanical and thermal stresses in the system. Attempts to fabricate such parts from ceramics have failed because of the prohibitive costs associated with existing technology. A major reason for the prohibitive costs of ceramic construction is that the components must be cast as thick walled sections which must then be machined to form flanges, apertures, etc. This process wastes expensive ceramic material and requires extensive labor and the use of sophisticated tooling and cutting techniques.

The effectiveness of a pulse combustion energy system depends a great deal on its operating characteristics. For example, the operating frequency affects the rate of flow through the system (and hence drying time) of material to be dried, and the amplitude, or pressure, of the sonic shock wave must be appropriate for a given material since too much pressure overdries or destroys the material while too little pressure provides inadequate drying.

Present systems operate only at the natural frequency of the pulse combustor which is set by the length of the exhaust tubes. Accordingly, the operating frequency, and hence drying rate, cannot be altered without the substantial expenditures resulting from system reconstruction. This often results in systems which will only achieve their maximum efficiency when used to dry a specific type of material. Furthermore, since the natural frequency of the pulse combustor also depends on the speed of sound, variations in temperature in the combustor will change the natural frequency. As the natural frequency deviates from the frequency of optimal performance of the pulse combustor, the amplitude of the pressure wave diminishes, increasing the drying time of some products above acceptable levels. The result is lack of uniformity and effectiveness in drying.

Another disadvantage of present systems resides in the inability to meet OSHA standards. External noise has been a major reason for industry to discount pulse combustion as a viable alternative energy source since ambient noise can exceed 120 dB.

Finally, a risk of explosion is often present because of overheating during operation, excessive fuel buildup during start-up, or combustion of the dried product when there is excessive oxygen in the drying gas stream.

It is therefore an object of the present invention to provide an improved rotary valve capable to withstand the demanding conditions of a hot environment and having a long life therein, which can be easily and economically manufactured.
These objects are achieved by the features of claim 1. Therefore, in the present invention, a fluid such as an oxidizer, e.g. air, flowing into the rotary valve and toward e.g. a combustion chamber passes through an annular "air diode" constructed so that fluid flow from the outlet end toward the inlet end is impeded to a greater extent than a fluid flow from the inlet end toward the outlet end thus reducing backpressure on the rotary valve and greatly increasing valve life. If used in a pulse combustor, the rotary valve also eliminates the use of a substantial percentage of the energy from the combustion process to pump the combustion air required for the succeeding fuel detonations.

A preferred embodiment is described in claim 2. According to this, the speed of the rotation may be varied to regulate the flow of air pulses through the rotary valve. If used in a pulse combustor, this allows the operating frequency of the pulse combustor to be varied as the application requires. This increases operating flexibility and safety, compared to the valve disclosed in the DE-AS 1 110 800, which provides only a phase shifter but no means for rotating the valve at a frequency unequal to the resonant frequency of the pulse combuster, which is set by the length of the exhaust tubes.

The rotary valve will now be described with respect to a pulse combustion energy system and with reference to the drawings, in which:

Fig. 1 is a side cross sectional view illustrating a preferred embodiment of the invention.

Fig. 2A is a side cross sectional view of the pulse combustion engine of Fig. 1.

Fig. 2B is an alternative embodiment of the pulse combustion engine of Fig. 2A.

Fig. 3A is a side cross sectional view of the rotary valve used in the pulse combustion engine of Fig. 2A.

Fig. 3B is a side cross-sectional exploded view of the outer, intermediate, and inner sleeves of the rotary valve used in the pulse combustion engine of Fig. 2A.

Fig. 4 is a detailed view of the coupling mechanism for the combustion chamber and inner tail pipe of Fig. 2A.

Fig. 5 is a schematic diagram of the flame safety system used in the preferred embodiment of the invention.

Fig. 6 is a schematic diagram of the operating control system used in the preferred embodiment of the invention.

Fig. 7 is a side cross-sectional view illustrating an alternative embodiment of the invention.

### DETAILED DESCRIPTION OF THE PREFERRED EMBODIMENTS

### Overview

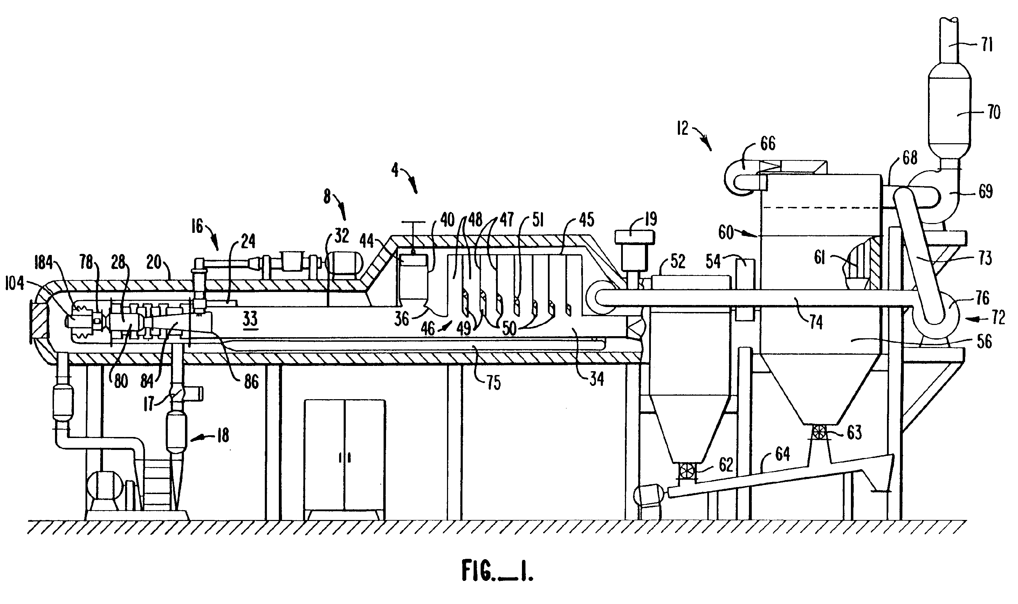

Fig. 1 shows the novel pulse combustion energy system generally designated as 4. Pulse combustion energy system 4 includes a processing section 8 and a receiving section 12. A product feed system 16 is coupled to processing section 8 for introducing material to be processed into processing section 8, and an air pump assembly 18 having a combustion air control damper 17 provides combustion air to the system by drawing air through an air inlet filter silencer 19.

Processing section 8 includes an outer shell 20 which is lined with sound absorbing materials to reduce the external system noise level. Disposed within outer shell 20 is combustor mounting cell 24 within which is mounted a pulse combustor 28.

Also disposed within outer shell 20 and coupled to pulse combustor 28 is a processing tube 32 having an upstream section 33 and a discharge section 34. Discharge section 34 has a constriction 36 so that the sonic pulse from pulse combustor 28 is partially reflected back, establishing in part a pattern of standing waves. Upstream of constriction 36 is an adjustable wave tuner 40 having a piston 44 which may be adjusted from the exterior of outer shell 20. Adjustable piston 44 allows the operator to set the amplitude of the standing waves from a maximum value down to a point where the reflected waves are fully dampened and no standing waves are produced.

Downstream of constriction 36 is a baffle assembly 46 which is designed to suppress the high intensity sound before the vapor and processed particles flowing through processing tube 32 enter receiving section 12. Baffle assembly 46 comprises a baffle housing 45 having a plurality of movable sound partitions 47 therein which define a plurality of sound suppression chambers 48. Sound partitions 47 may be axially adjusted to alter the volume of sound suppression chambers 48 for a particular application. A variable length upper portion 51 of each sound partition 47 further alters the volume of sound suppression chambers 48. At the bottom of each partition 47 is a deflector 49 which is shaped to effect a prescribed constriction and rate of opening for each sound suppression chamber 48. A lower surface 50 of each deflector 49 is shaped to ensure that the particles flowing through processing tube 32 are deflected away from the entrance to each chamber 48.

Coupled to the discharge section 34 of processing tube 32 is receiving section 12 including a first cyclone collector 52 which, in turn, is coupled through a silencer 54 to a second cyclone collector 56 having a bag house 60 including fabric bags 61 disposed on the top thereof. Cyclone collectors 52 and 56 are fully insulated to reduce the noise on their exterior. At the bottom of each cyclone collector 52, 56 are star valves 62, 63, respectively, for the discharge of a processed product to a processed product conveying system 64. Disposed on the top of second cyclone collector 56 is a blowback fan 66 for intermittently blowing air counterflow through fabric bags 61.

Coupled to an outlet 68 of second cyclone collector 56 is an induced draft fan 69 designed to pull the vaporized moisture and combustion products through receiving section 12 and then push them through an exhaust silencer 70 and through a stack 71. Also coupled to outlet 68 is an optional recycling section 72 having conduits 73 and 74, a recycle air feed tube 75, and a recycle fan 76 for recycling the vapor stream flowing through second cyclone collector 56 to upstream section 33 of processing tube 32 when the pulse combustion energy system is used in an application where the load varies and maximum turndown is required. Recycling section 72 may be optionally coupled to the outlet of first cyclone collector 52 if desired.

### Rotary Valve

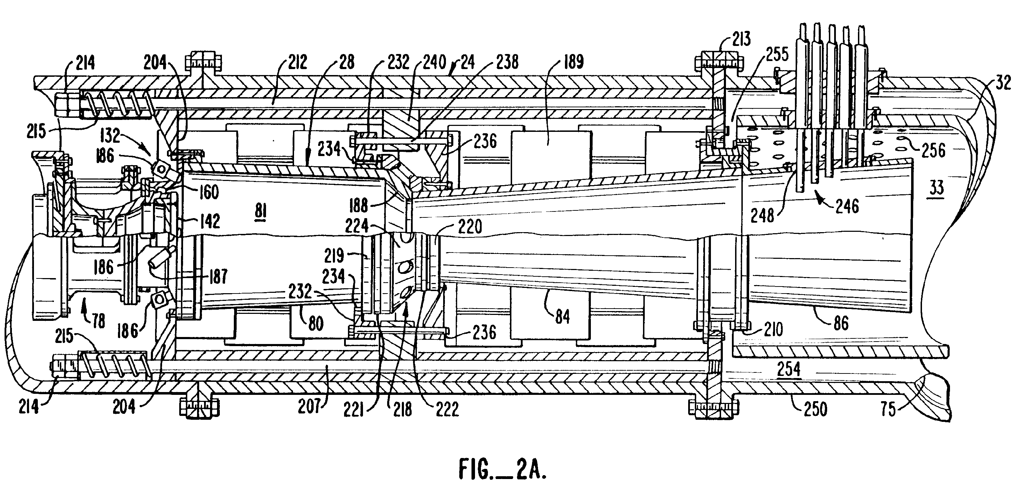

As shown in Fig. 2A pulse combustor 28 generally comprises a rotary valve 78, a combustion chamber sleeve 80 whose interior defines a combustion chamber 81, an inner tail pipe 84 and an outer tail pipe 86.

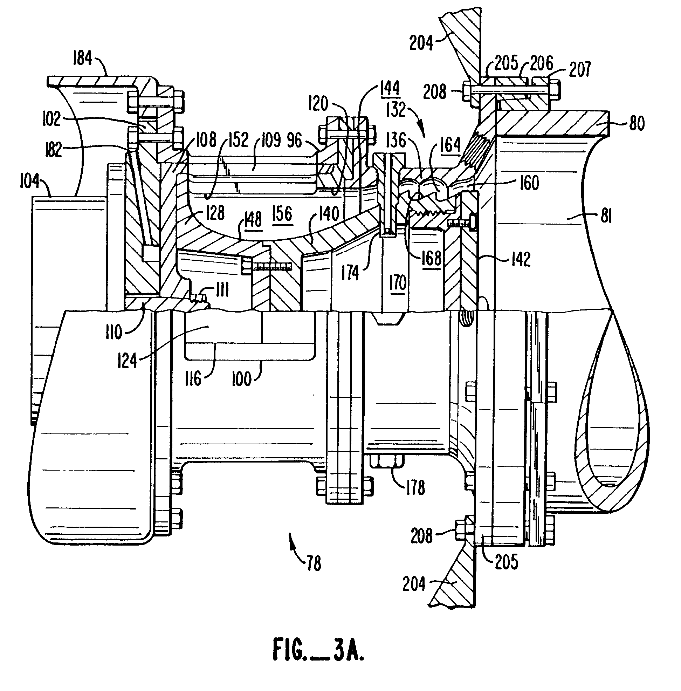

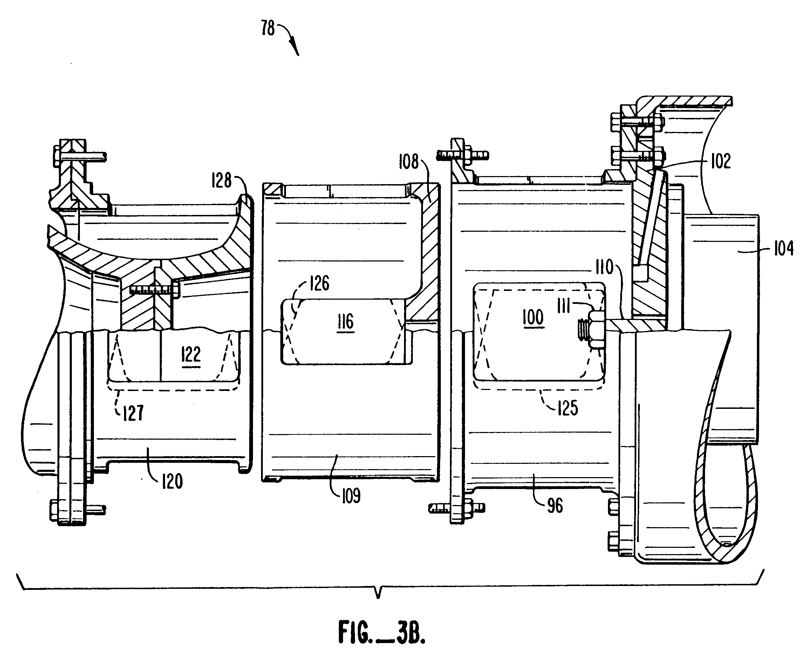

As shown in Figs. 3A and 3B, rotary valve 78 has an outer sleeve 96 having a plurality e.g. four apertures 100 of a prescribed geometry which are equally spaced or disposed in any manner around the perimeter thereof which results in a balanced structure. Outer sleeve 96 is affixed to a face plate 102 of a valve motor 104. Disposed coaxially within outer sleeve 96 is a valve rotor defined by a drive plate 108 and an intermediate sleeve 109 attached thereto. Drive plate 108 is coupled to valve motor 104 through a motor shaft 110 and shaft nut 111. Intermediate sleeve 109 has a plurality e.g. four apertures 116 of a prescribed geometry which are equally spaced or disposed in any manner around the perimeter thereof which results in a balanced structure. Apertures 116 generally align with outer sleeve apertures 100 when intermediate sleeve 109 is in a prescribed rotational position. As used herein and throughout the specification and claims, apertures generally align whenever they form a common opening of any shape or size.

Disposed coaxially within intermediate sleeve 109 is an inner sleeve 120 having a plurality, e.g. four apertures 122 of a prescribed geometry equally spaced or disposed in any manner around the perimeter thereof which results in a balanced structure. Inner sleeve 120 usually has the same number of apertures as outer sleeve 96, and apertures 100 in outer sleeve 96 are generally aligned with them. In some cases it may be advantageous to advance or retard apertures 100 in relation to the apertures 122 in inner sleeve 120 to obtain optimum performance. Apertures 100, 116 and 122 define an air intake 124 for valve 78 as shown in Fig. 3A.

Apertures 100 are also designed to be modified as necessary to allow the valve capacity coefficient Cᵥ of rotary valve 78 to vary predictably as the air intake 124 opens and closes to match the engine performance needs. They may be shaped, as shown by dotted lines 125 in Fig. 3B, to allow a greater or lesser air flow as air intake 124 initially opens, or they may be shaped to allow a greater or lesser air flow just as air intake 124 closes. In other words, apertures 100 have the necessary shape to provide the engine with the desired air intake flow rate and characteristics. The apertures in intermediate sleeve 109 or inner sleeve 120 likewise may be shaped to adjust the engine breathing rate as shown by dotted lines 126 and 127, respectively.

Adjacent to drive plate 108 and coupled to inner sleeve 120 is a backplate 128 for preventing the back pressure from combustion chamber 81 from pressurizing drive plate 108. This protects motor shaft 110 and shaft nut 111 while preventing any thrust loading of valve motor 104.

As shown in Fig. 3A, located adjacent to outer sleeve 96, intermediate sleeve 109, and inner sleeve 120, opposite motor 104, is a valve outlet section 132 comprising an outer portion 136, coupled to combustion chamber sleeve 80 and inner sleeve 120, and an inner portion 140 disposed coaxially within and radially spaced from outer portion 136. Inner portion 140 is coupled to backplate 128 at one end and to a flame stabilizer 142 at the other end. Flame stabilizer 142 is preferably constructed of ceramics.

An outer surface 144 of inner portion 140, an outer surface 148 of backplate 128, and an inner surface 152 of inner sleeve 120 together define an annular air chamber 156 in fluid communication with an annular "air diode" 160 formed by an inner surface 164 of outer portion 136 and an outer surface 168 of inner portion 140. The shape of annular air diode 160 is such that it will impede the flow of gas from combustion chamber 81 toward air chamber 156 to a greater extent than the flow of gas from air chamber 156 toward combustion chamber 81. This is accomplished by scalloping surface 164 and by forming surface 168 as a series of waves as shown in Fig. 3A.

Annular air chamber 156 is designed to minimize the air volume between the combustion chamber 81 and the air intake. This reduces any cushioning effects this volume might have on the shock waves which are reflected towards the valve 78 during the detonation phase of the pulse combustor cycle.

Disposed within inner portion 140 is a cooling chamber 170 having a cooling inlet 174 and a cooling outlet 178 so that a cooling medium flowing through cooling chamber 170 helps cool the rotary valve/combustion chamber junction during operation.

To provide further cooling an air inlet 182 is provided to supply air to the junction of drive plate 108 and face plate 102. The air flows toward and through the annulus defined by the inner surface of outer sleeve 96 and the outer surface of intermediate sleeve 109 and ultimately passes through apertures 116 and 122 in intermediate sleeve 109 and inner sleeve 120, respectively, and into air chamber 156.

As shown in Fig. 1, rotary valve 78 is mounted to the front of the pulse combustor 28 and located in the combustor mounting cell 24. The rotary valve motor 104 is also mounted inside the combustor mounting cell 24, but an expansion joint 184 provides an airtight seal between the motor 104 and the inside of the pulse combustor mounting cell 24. Expansion joint 184 also takes up any expansion due to heat buildup in the combustor during operation.

### Pulse Combustor

Fig. 2A illustrates the remaining sections of pulse combustor 28. Located adjacent to valve outlet section 132 is combustion chamber sleeve 80 the interior of which defines combustion chamber 81. Combustion chamber 81 is in fluid communication with the annular air diode 160 of valve outlet section 132. Four fuel nozzles 186 and two igniters 187, mounted adjacent to two of the fuel nozzles 186, are disposed circumferentially on valve outlet section 132 for supplying fuel and ignition energy to combustion chamber 81. Combustion chamber sleeve 80 terminates in a tapered combustion chamber exit 188. Adjacent combustion chamber exit 188 is inner tail pipe 84 and outer tail pipe 86, respectively. A radiation shield 189 is disposed circumferentially around combustion chamber sleeve 80 and inner tail pipe 84 to protect combustor mounting cell 24 against the extreme temperatures generated by these sections. During normal operation, incoming air is heated by radiation shield 189 as the air flows toward rotary valve 78, and the heated air recycles the combustor 28 surface heat losses back to the pulse combustion process for increased efficiency.

The combustion chamber sleeve 80, the flame stabilizer 142, and the inner tail pipe section 84 of the pulse combustor 28 are subjected to the highest temperatures in the system. All flanges, apertures and other rough features have been eliminated from these sections to reduce thermal stress concentrations which can lead to a cracking of the parts, which renders them useless. Combustion chamber sleeve 80 and inner tail pipe 84 may then be constructed as smooth conical and tubular sections. This makes it commercially feasible to use high temperature ceramic materials to fabricate these parts, since the need for thick wall casting and extensive machining is eliminated. The ceramic parts significantly improve the life of this pulse combustor over others presently known. Accordingly, there are three different ways of fabricating these parts listed in the order of preference:
A. They may be fabricated entirely out of high temperature ceramic materials such as Silicon Nitride, Silicon Carbide, Alumina Oxide, or Mullite-type ceramics. Different engine sections in the same engine assembly may be made from different ceramics. It is also possible to metallize the inside surface of the ceramic parts with catalytic metals such as platinum (or other metals) which improve the combustion process and reduce pollution.
B. They may be fabricated or cast as thin walled sections made from Inconel or high temperature stainless steel and lined with thin walled ceramic segments which are attached to the inside surfaces of the metal shells. The same type of ceramics as described in A, above, may be used with this fabrication method. This system is preferable when the engine parts are larger than the equipment available to manufacture the individual ceramic sections. Again, the inside surface of the ceramic inserts may be metallized with catalytic metals such as platinum to improve the combustion process.
C. They may be fabricated or cast as thick walled sections made from Inconel or high temperature stainless steel and coated with high temperature Zirconia based coatings. The Zirconia coating is about 10-15 thousandths of an inch thick and will reduce the metal surface temperature by more than 200°F.

In addition to eliminating thermal stresses by fabricating the components without stress-producing features, the mounting system must substantially eliminate all bending moments on these sections in order to reduce the probability of failure of the parts due to mechanical stresses. The mounting system illustrated in Figs 2A, 3A and 4 achieves this result.

As shown in Fig. 3A, a bracket 204 applies pressure to a flange 205 radially extending from outer portion 136 of outlet section 132. Flange 205 is coupled to combustion chamber sleeve 80 through a ring 206 and a wedge 207, and the assembly is secured by bolts 208. As shown in Fig. 2A, bracket 204 longitudinally compresses combustion chamber sleeve 80 and inner tail pipe 84 against a flange 210 of outer tail pipe 86. Bracket 204 is secured by compression bolts 212 which thread into a flange 213 and are secured by nuts 214 and expansion springs 215. Expansion springs 215 allow for thermal expansion of pulse combustor 28 during operation.

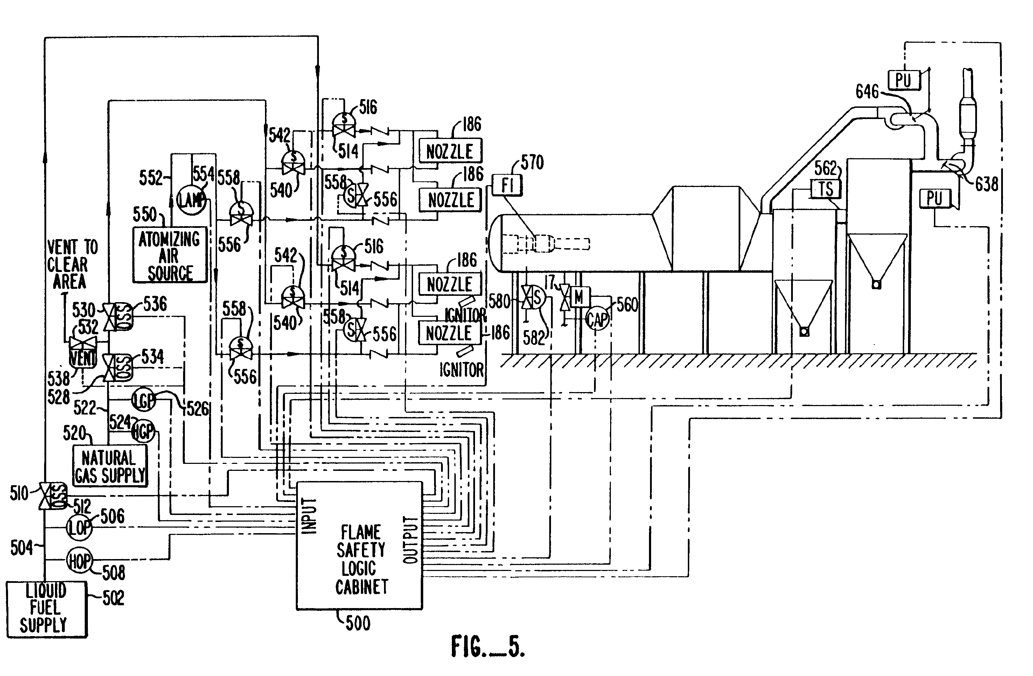

To avoid bending moments at combustion chamber exit 188, a strongback assembly 218, illustrated in Fig. 4, transmits externally the force which compresses combustion chamber sleeve 80 and inner tail pipe 84 towards each other. Strongback assembly 218 comprises stainless steel rings 219, 220, which clamp stainless steel wedges 221, 222 respectively to combustion chamber sleeve 80 and inner tail pipe 84, respectively. A strongback ring 224 is disposed between wedges 221 and 222.

Strongback assembly 218 is secured to a bracket 232 by bolts 234 passing through bolt holes in ring 219 and wedge 221 and extending into strongback ring 224. Strongback assembly 218 is secured to a bracket 236 in a similar fashion. A pin 238 extends slidingly through brackets 232, 236 and a support bracket 240. Pin 238 allows the midsection of pulse combustor 28 to be supported while accommodating any thermal expansion during operation. Longitudinal compression of combustion chamber sleeve 80 is thus transmitted externally to wedge 221 and along strongback ring 224 to wedge 222 which in turn directs the longitudinal compression to inner tail pipe 84.

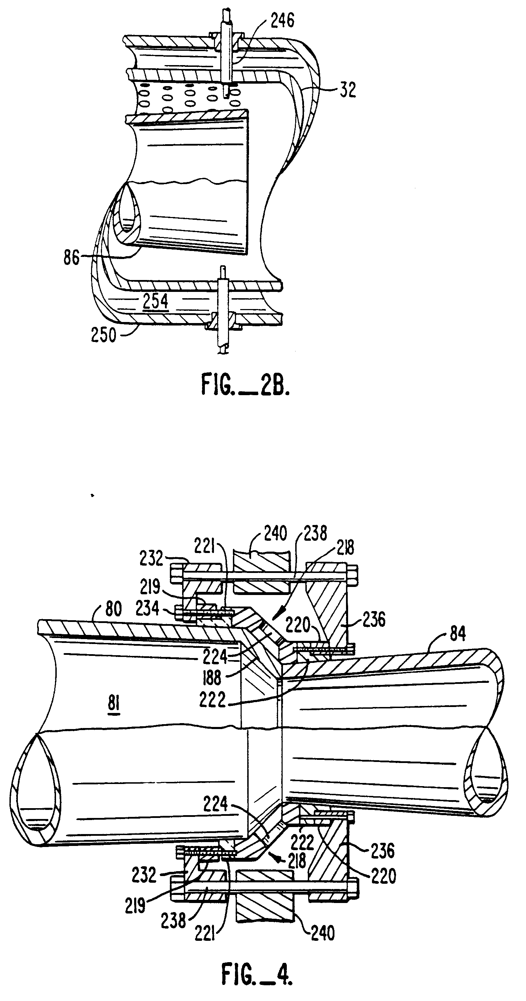

The outer tail pipe 86 will operate under different conditions than the other pulse combustor sections. It is subjected to much higher thermal stress loadings because the material to be processed enters the tail pipe through a plurality of nozzles 246 extending through a plurality of apertures 248 as shown in Fig. 2A. As a result, this section is not usually made from ceramic materials. The processed material is at much lower temperatures than the gas stream so the tail pipe surface must accommodate high temperature differentials. It is preferably made of Inconel or high temperature stainless steels and may be coated with high temperature Zirconia. It is within the scope of the present invention to dispose the nozzles 246 externally of tail pipe 86, as shown in Fig. 2B, and flow the material to be processed generally parallel to tail pipe 86. This arrangement is preferable in systems used to dry material, such as tomatoes, wherein a component of the material, such as sugar, tends to accumulate at the nozzle openings when the nozzles are disposed in the tail pipe. Eliminating apertures 248 in this embodiment allows outer tail pipe 86 to be fabricated from ceramic materials. It is also within the scope of the present invention to use only one nozzle 246 when desirable.

As shown in Fig. 2A, combustor mounting cell 24 mounts to processing tube 32 so that outer tail pipe 86 is coaxially disposed within and radially spaced from the inner surface of processing tube 32.

Part of the upstream section 33 of processing tube 32 is disposed coaxially within and radially spaced from a recycle air sleeve 250 forming an annular air passage 254. Coupled to recycle air sleeve 250 and in fluid communication with annular air passage 254 is recycle air feed tube 75 which receives recycled vapor from receiving section 12. The recycled vapor flows from annular air passage 254 and into processing tube 32 through a plurality of slots 255 circumferentially disposed on the surface of processing tube 32.

Since the natural frequency of a pulse combustor depends in part on the length of the tail pipe, it is desirable in some cases to ensure that processing tube 32 does not have the effect of being an extension of outer tail pipe 86. To accomplish this, a plurality of apertures 256 are circumferentially disposed on the surface of processing tube 32 for forming a decoupler between outer tail pipe 86 and processing tube 32. Apertures 256 may be selectively covered with plates (not shown) to vary the decoupling effect.

### Flame Safety System

The pulse combustion energy system is started, operated and shut down under the supervision of a flame safety system illustrated in Fig. 5. The flame safety system is controlled by a programmable microprocessor or a relay logic system located in a logic cabinet 500. Logic cabinet 500 receives signals from a plurality of sensors, and these signals are used to control the fuel, fuel drain, combustion air, and atomizing air systems described below.

A liquid fuel supply 502, preferably No. 2 fuel oil, is coupled to a fuel line 504 which is monitored by a low oil pressure switch 506 and high oil pressure switch 508. Disposed in fuel line 504 is a safety shut-off valve 510 which is controlled by a safety shut-off solenoid 512. Fuel line 504 passes through shut-off valves 514, controlled by shut-off solenoids 516, and then to nozzles 186.

A natural gas supply 520 is coupled to fuel line 522 which is monitored by high gas pressure switch 524 and low gas pressure switch 526. Disposed in fuel line 522 are safety shut-off valves 528, 530, and vent valve 532 which are controlled by safety shut-off solenoids 534, 536, and vent solenoid 538, respectively. Fuel line 522 passes through shut-off valves 540, controlled by shut-off solenoids 542, on its way to nozzles 186.

An atomizing air source 550 is coupled to an atomizing air line 552 which is monitored by a low atomizing air pressure switch 554. Atomizing air line 552 passes through shut-off valves 556, controlled by shut-off solenoids 558, and proceeds to nozzles 186.

A low combustion air pressure switch 560 for monitoring combustion air pressure is coupled to air intake assembly 18 below combustion air control damper 17, and a system high temperature switch 562 is coupled to the processing tube to detect overheating in the system.

The flame safety system also has a flame indicator 570 for detecting the combustion process. In a pulse combustion system, flame indicator 570 may be either an optical scanner for detecting the ultraviolet or infrared light waves radiating from the flame, or a pressure sensor for measuring a positive pressure pulse which is produced by the detonation of fuel in the combustion chamber. The pressure sensor is calibrated so that it will detect pressures in excess of the supply pressure of the combustion air blower so that it will only measure the component of the total pressure supplied by the burning of the fuel.

The flame safety system will shut off fuel to the pulse combustor under the following conditions: low or high fuel pressure, low combustion or atomizing air pressure, flame out, or high system temperature. When oil is being used, safety shut-off solenoid 512 will close safety shut-off valve 510, and if gas is being used, safety shut-off solenoids 534 and 536 will close safety shut-off valves 528 and 530, respectively, and vent solenoid 538 will open vent valve 532.

The flame safety system also controls the combustion chamber fuel drain system. The pulse combustion system has a special drain valve 580 mounted on outer portion 136 of rotary valve 78, which is coupled to a solenoid 582. The pulse combustor drain valve 580 is opened by the flame safety system whenever there is an attempt to ignite oil either during start-up or during fuel changeover. When flame indicator 570 detects the ignition of the fuel oil, the flame safety logic closes the combustion chamber drain valve 580 and any excess fuel will have been removed from the chamber.

### Process Control System

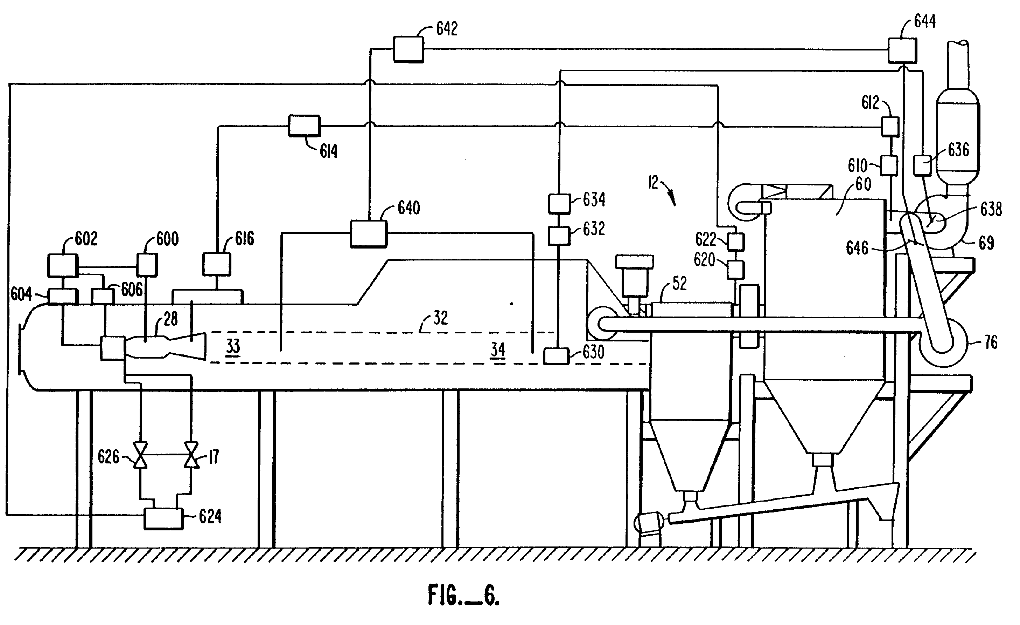

As shown in Fig. 6, the Pulse Combustion Energy System has process controls which allow for automatic control of the system. These controls are designed to check process set points and adjust the operating parameters to maintain the set points. The operating set points are adjusted depending on the product to be processed through the system, the rate at which it is processed, etc.

One control loop sets the speed of the rotary valve 78 to vary the operating frequency of the pulse combustor 28. A frequency sensor 600 is used to measure the combustion pulse rate which in turn transmits a signal to a controller 602 where the operating frequency set point can be adjusted. Frequency sensor 600 may alternatively be used to measure the rate of air pulses entering combustion chamber 81. The controller 602 sends a signal to a motor control unit 604 to adjust the valve speed and receives a feedback signal from a valve motor tachometer 606 to verify the actual valve RPM. Controller 602 and/or control unit 604 may be an integral part of rotary valve 78. The adjustment at controller 602 allows the rotary valve 78 speed to be set at the natural frequency of pulse combustor 28 or slightly off frequency, depending upon the product being processed. This feature is included because, as the rotary valve 78 speed approaches the natural frequency of the pulse combustor 28, the sonic pressure wave is enhanced, which may increase the processing speed of some products above acceptable levels and cause the processed particle temperature to increase. Products which are more difficult to dry would require the maximum sonic pressure wave and rotary valve 78 is operated at a rate which matches the natural frequency of the engine to achieve this result.

A separate control loop is used to establish the product feed rate and adjust the feed rate according to the moisture content. When the pulse combustion system is operating, it is necessary to keep the bag-house 60 temperature above the dew point (approximately 212°F in dewatering applications) so that condensing water will not cause the fine particles caught on the bag surface to become wet and stick to the bags. Since the system heat input is set by the desired production rate and it is difficult to know at any instant what the moisture content of the feed will be, a temperature sensor 610 is mounted in the discharge of the baghouse 60. From the sensor 610, a temperature transmitter 612 sends a signal to a temperature controller 614 which sets the baghouse 60 discharge temperature about 10°F above the dew point. The controller 614, in turn, sends a signal to the variable speed motor controller 616 which operates the product feed system 16, setting the speed at which the product is fed to the pulse combustion system. If the product has less moisture, the feed rate is increased. If the product has more moisture, the feed rate is reduced so that the water to be removed from the product by the system is not greater than the heat which is available to evaporate the water.

A control loop is also provided to allow the operator to set the system firing rate and protect the system from overheating if the product feed should be temporarily interrupted. A temperature sensor 620 measures the temperature at the discharge of the first cyclone collector 52. From the sensor 620 a temperature transmitter 622 sends a temperature signal to a temperature controller 624 where the operator can either establish a control set point or set the system firing rate by hand. The signal from controller 624 sets the position of a fuel control valve 626 and the combustion air control valve 17. The valves both have positioners to tell controller 624 what percentage the valves have opened or closed. This system may also be used to set the pulse combustion system firing rate if the equipment is to be operated at less than full capacity. Also, if a particular product is hard to dewater or takes longer to dewater, this control loop cuts back the firing rate when the first cyclone collector 52 temperature becomes too high. It also cuts back the firing rate if the product feed is interrupted resulting in an increase in temperature. If this control loop cannot cut firing rate sufficiently to maintain the cyclone temperature below a prescribed level, then the flame safety system shuts down the system when the system high temperature switch 562, shown in Fig. 5, activates.

A control loop is also provided to control the pressure in processing tube 32. The pressure must be controlled to insure that the proper system pressures are maintained downstream of the pulse combustor 28 and in receiving section 12. This in turn insures that the flow rate through the collectors is within limits for optimum system performance. The control loop consists of a pressure indicator 630 which is located at the discharge section 34 of processing tube 32 and which senses the system pressure. The signal from the pressure indicator 630 goes to a pressure transmitter 632 and on to a pressure controller 634 which is set to maintain the pressure at the end of processing tube 32. The controller 634 then sends a signal to a power unit 636 that drives an inlet vane control damper 638 on the induced draft fan 69.

If the pulse combustion system is used in an application where the load varies and maximum turndown is required, an additional control loop maintains the vapor velocities in the processing tube 32 at the reduced system firing rates. The control loop has a differential pressure transmitter 640 which senses the pressure drop through the processing tube which in turn reflects the proper velocity. The transmitter 640 sends a signal to a differential pressure controller 642 where the operator can adjust the differential pressure set point according to the desired processing tube velocity. The differential pressure controller 642 sends a signal to a power unit 644 which adjusts the setting of an inlet vane control damper 646 on the recycle fan 76. At the regular firing rate, the velocity in the processing tube 32 would be higher than the set point so the inlet vane control damper 646 is normally closed. As the firing rate is reduced, the processing tube 32 velocity falls until the set point is reached. Then the controller 642 starts to open the inlet vane control damper 646 to add recycle air to the processing tube 32 so that the minimum conveying velocity is maintained. The recycle stream is made up of vaporized water and products of combustion which are 10 degrees above the dew point. This means that the recycle stream will not reduce the system thermodynamic efficiency nor will it add oxygen to the system which might degrade the particles in the processing tube or create a risk of explosion by mixing added oxygen with unburned combustion fuel or with the fine particles of a combustible product being processed.

### Operation

The pulse combustion energy system is started, operated, and shut down under the supervision of the flame safety system. This system has the logic to control the light-off sequence timing, to check all permissive limit switches and open the appropriate fuel valves in the proper order during the system start-up. During the system operation, the flame safety system constantly checks that the combustion process is functioning normally and ensures that all the fuel, combustion air and other required services are within acceptable limits to support the combustion process. The system is also used to properly sequence the shut down of the pulse combustor both in the event an emergency situation develops or in the normal process of terminating the system operation.

The pulse combustion energy system operation begins with energizing the flame safety system at cabinet 257. Then air pump assembly 18, the rotary valve 78, the induced draft fan 69, the recycle fan 76 and the other motors in the system are started. The flame safety system then checks and verifies that all the limit switches show that the system's services are within design specifications. With all the permissives set, the flame safety system drives combustion air control damper 17, inlet vane control damper 638 and inlet vane control damper 646 to the full open position prior to the start of the engine purge. At this point, the engine purge timing begins. The purge timer starts, and the rotary valve 78 speed is set to the proper frequency for initial engine ignition at low fire. Air pump assembly 18 draws outside air through air inlet filter silencer 19 and into air pump assembly 18 where its pressure is increased by up to 6 PSI. From the air pump assembly 18 the air flows into combustor mounting cell 24 where it passes inside the radiation shield 189. The combustion air then enters the rotary valve 78 on its way to the combustion chamber 81. The combustion chamber receives a minimum of five complete air charges during the purge cycle.

When purging is complete, the flame safety system drives combustion air control damper 17, inlet vane control damper 638 and inlet vane control damper 646 to the ignition position. When the dampers are proven to be in the ignition position, the flame safety system energizes the two (or more) igniters 187 and opens the gas safety shut-off valves 528, 530 while closing the vent valve 532. The system also opens the gas solenoid valve 540 that supplies gas to the two (or more) fuel nozzles 186 which are adjacent to the two (or more) igniters 187. At this point the ignition timer starts and holds the safety shut-off valves 528, 530 open for the 10 second trial for ignition.

The pulse combustion cycle starts when an air pulse from the rotary valve 78 mixes with gas from the two nozzles 186 and the mixture explodes due to the ignition energy from igniters 187. When the fuel and air detonate, the pressure in the combustion chamber 81 increases, causing a back flow of the air in the chamber towards the closed rotary valve 78. As the back flow of air flows through air diode 160, surface 168 in air diode 160 causes the air flowing there along to reverse direction and flow transversely toward surface 164. The combination of the reverse momentum of this flow with the scalloped shape of surface 164 creates an artificial vena contracta which has the effect of constricting the flow through air diode 160 and reducing the back pressure on the closed rotary valve 78.

If the flame safety system detects the proper ignition of fuel with flame indicator 570, it leaves the safety valves open and allows the operator to open the gas solenoid valve 540 to the remaining fuel nozzles. On the other hand, if the flame indicator 570 fails to pick up a positive flame signal within the 10 second trial for ignition, the safety valves 528, 530 are closed and the system returns to its prepurge point in the system start-up program.

When all fuel nozzles 186 are operating and the flame safety system detects a normal flame, the system releases dampers 17, 638 and 646 to the combustion control system where the process controls set the pulse combustion firing rate.

The flame safety system also contains the logic and controls to allow a changeover from one fuel to another. Fuel nozzles 186 are designed to inject gas or liquid fuels or both. During normal operation the nozzles are set to fire on air atomized oil. Air atomized oil is preferable over prior art systems which use pressure-atomized mechanically injected fuel oil because the air atomized oil produces smaller oil drops which yaporize faster. This also ensures that detonation occurs on time due to the initial combustion that takes place between the oil and the atomizing air as the mixture is discharged into the hot combustion chamber.

The fuel changeover starts by firing all fuel nozzles 186 on natural gas. The flame safety system checks the oil and atomizing air limit switches to ensure they fit within specifications and then opens the combustion chamber drain valve 580. The operator opens shut-off valve 514 to allow oil to flow to two (or more) of the nozzles 186 which are firing natural gas. The natural gas atomizes the oil and the mixture immediately ignites. Within 10 seconds the combustion chamber drain valve 580 closes and the operator opens atomizer air valve 556 and closes shut-off valves 540 on the natural gas system. The atomizing air blows the remaining gas out of the fuel nozzles 186 and takes over the function of atomizing the fuel oil. The operator repeats the process and changes the remaining two (or more) nozzles 186 over to firing oil.

This ability to burn two fuels on the same nozzles gives the pulse combustion system additional flexibility in selecting fuels and firing modes. The system can be set up to operate as follows:
A) ALL NOZZLES FIRING AIR ATOMIZED OIL
B) ALL NOZZLES FIRING GAS ATOMIZED OIL
C) HALF NOZZLES FIRING AIR ATOMIZED OIL AND
   HALF NOZZLES FIRING GAS ATOMIZED OIL
D) HALF NOZZLES FIRING AIR ATOMIZED OIL AND
   HALF NOZZLES FIRING GAS
E) HALF NOZZLES FIRING GAS ATOMIZED OIL AND
   HALF NOZZLES FIRING GAS
F) ALL NOZZLES FIRING GAS

The combustion fuel is supplied to the combustion chamber 81 at low pressure (below 1034 mbar above atmospheric pressure (15 PSIG)) so that its flow will be interrupted by the peak combustion pressures in the combustion chamber 81. This means that fuel flow is automatically timed to the pulse frequency of the combustion chamber 81 and the fuel system does not need a special valve which is timed to open and close in sync with the variable speed rotary valve 78.

The initial detonation releases heat and creates a pressure wave. The heat starts to heat up combustion chamber sleeve 80, inner tail pipe 84, and outer tail pipe 86 while the pressure wave stops the flow of the fuel gas and sends a pressure pulse down initial and outer tail pipes 84 and 86, respectively. The momentum of the combustion products moving down the tail pipes with the wave generates a partial vacuum in the combustion chamber that is in sync with the opening of the rotary valve 78. This draws additional charges of air and gas from the valve and the fuel nozzles 186 which mix rapidly. At this instant the rotary valve 78 closes and the mixture comes in contact with combustion products remaining from the previous cycle which, along with the hot combustion chamber walls, causes the ignition of the new fuel charge. The pulse combustor 28 typically cycles and detonates between 100 and 200 times per second. Each pulse sends a pressure wave, followed by a partial vacuum, down tail pipes 84 and 86.

During the unit start-up and during fuel changeover, the temperature in the combustor is likely to shift. This will change the operating frequency. Here the variable speed rotary valve 78 on the combustion air system can be set to follow the frequency change. This improves the safety as well as the reliability of the system.

Once the system is started up, a slurry, which can consist of up to 99% moisture, is sprayed into the outer tail pipe 86 where it comes into contact with the heat and sonic energy from the pulse combustion process. Nozzles 246 are oriented to effect a prescribed spray configuration so that the slurry is exposed to the hot gas pulses in a manner which maximizes drying effectiveness. As the mixture flows through processing tube 32, the water is mechanically driven or stripped off the solid particles in the feed by the sonic shock waves and, at the same time, the heat evaporates the moisture, thus completing the drying process in fractions of a second.

The processed particles then enter first cyclone collector 52 from which they are discharged through star valve 62 and into the dry product conveying system 64. The vapor, with a small percentage of the initial particulate loading, passes out of the first cyclone collector 52 and through silencer 54 into second cyclone collector 56. Second cyclone collector 56 further reduces the dust load in the vapor stream. Most of the remaining dust particles will drop to the bottom of second cyclone collector 56 from which they are discharged through star valve 63 and into the dry product conveying system 64.

At the top part of the second cyclone collector 56 is a baghouse 60 which has fabric bags 61 designed to remove the final and smallest particles from the vapor stream. The vapor stream moves up second cyclone collector 56 and through the fabric bags 61. The dust particles are deposited on the outside of the fabric bags 61 and the cleaned vapor stream is exhausted through the stack 71. To maintain the porosity of fabric bags 61, high volume low pressure vapor is intermittently blown counterflow through fabric bags 61 in reverse of the filtering action by blowback fan 66. The dust which has accumulated on fabric bags 61 is dislodged and falls to the bottom of the second cyclone collector 56 where it is discharged through star valve 63 and into the dry product conveying system 64.

As the system operates, the control system maintains proper valve speed, product feed rate, system firing rate, and vapor velocities to insure optimum performance.

The flame safety system is used to shut down the system if the combustion flame goes out, if the operating temperatures approach dangerous levels, or during normal shut down. A normal shut down starts with running all the feed material out of the slurry feed system. Then the pulse combustion engine 28 is set to low fire and the safety shut-off valves 510 and/or 528 are closed. All the system motors would be secured with the exception of air pump assembly 18, rotary valve 78 and the induced draft fan 69. If the system is firing oil, the atomizing air system would be left on until the atomizing air can be used to purge out the fuel nozzles 186 by opening valves 556. The airflow would burn out any remaining fuel and cool down the hot pulse combustion engine parts. After a short period the flame safety system would also secure the remaining motors and the system would be completely shut down.

### Conclusion And Alternative Embodiments

While the above is a complete description of a preferred embodiment of the present invention, the rapid and efficient dewatering capabilities of the pulse combustion energy system also may be used to process a wide range of products if the system configuration is modified to meet specific needs of a product. The horizontal configuration shown in Fig. 1 of the application would normally be used for slurry type products with small particle sizes. In this configuration, the exhaust from the pulse combustor and the steam released in the drying process is used to convey the particles through the system.

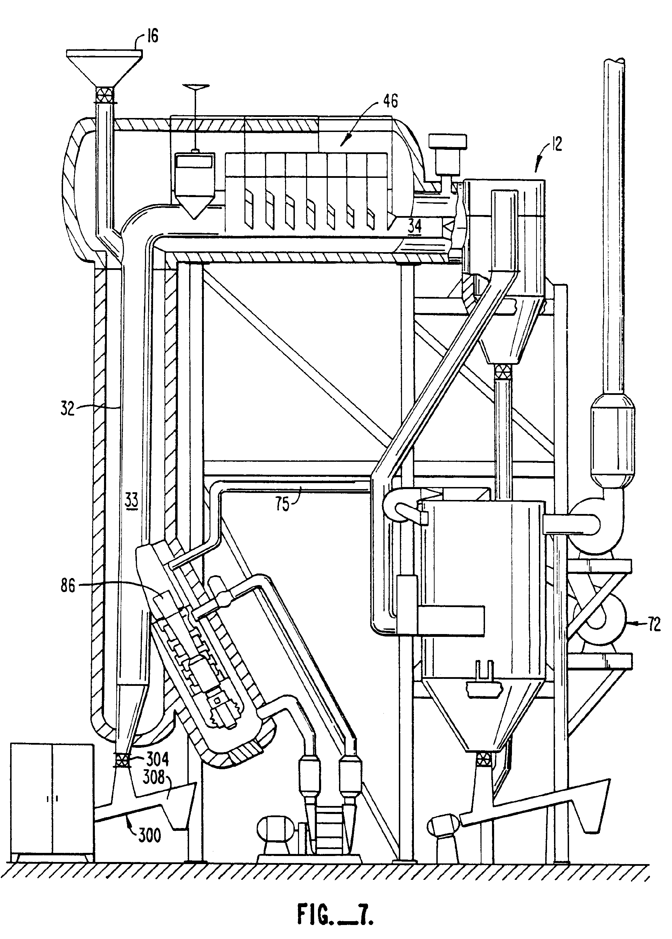

If, however, a large particle must be processed which cannot be conveyed through the processing tube by the pulse combustor exhaust, then a vertical and counter flow model of the system may be used. This system is shown in Fig. 7. In this case the feed is introduced at the upper end of the vertical section of the processing tube 32 opposite the pulse combustor 28. The product feed is drawn towards the pulse combustor by gravity while the sonic energy and heat passes up towards the top of the processing tube 32.

As the product passes through the sonic waves and heat, the moisture turns to steam which increases the gas velocity in the processing tube. This velocity change does not affect the larger particles which continue to fall to the bottom of the processing tube from which they are recovered by the large particle recovery system 300, comprising star valve 304 and the large particle conveying system 308. The dust or smaller particles which may be in the feed, or which may be detached from the large particles during the drying process, are picked up by the exhaust and steam and are conveyed through the baffle assembly 46 and on to the receiving section 12 for recovery.

The vertical configuration may also operate as a parallel flow unit if a slurry is introduced into the pulse combustor exhaust by nozzles extending through outer tail pipe 86 as shown for the horizontal configuration of the system in Fig. 1.

The vertical configuration also has an optional recycling section 72, similar in theory and construction to the recycling section for the horizontal unit, and a control loop, similar to the one shown in Fig. 6, to establish the exhaust and steam velocity in the processing tube. This velocity may be altered in order to establish a distribution of particles which either fall to the bottom of the processing tube or are carried over to the receiving section 12, i.e., this control loop acts as a primitive separator. Also, this control loop determines product stay time in the processing tube which establishes the dryness of the final product.

The remainder of the vertical system is identical in function to the horizontal configuration of the system.

The pulse combustion energy system may be used for many different applications such as firing boilers, calcining minerals, vaporizing products for distillation, and other chemical processes. In these applications, the pulse combustor may operate with a liquid oxidizer, instead of a gaseous oxidizer such as air, flowing into rotary valve 78. In fact, it is within the scope of the present invention to use rotary valve 78 and pulse combustor 28 with any oxidizing agent - that is, any substance which oxidizes by taking up electrons to form a new molecule and in the process releases energy in the form of heat and pressure. Depending on the application, the pulse combustor may operate oxidizer rich, stoichiometrically, or in a reducing mode by varying the setting of combustion air control damper 17 in response to a gas analyzer (not shown) which samples the combustion products emitted from outer tail pipe 86.

The systems described herein are for dewatering, so the collection systems shown are specifically designed for dewatering applications. If the pulse combustion energy system were to be applied to another process then the downstream equipment would be selected accordingly. Consequently, the foregoing description should not be used to limit the scope of the invention which is properly set out in the claims.

## Claims

1. A valve (78) for generating high frequency fluid flow pulses in a downstream direction comprising:
first and second coaxially mounted valve members (96, 109) in close proximity and adapted to rotate relative to each other, each member having an aperture (100, 116) for the flow of fluid therethrough, the apertures being arranged so that they move into and out of registration during relative rotation of the members and define a fluid inlet of the valve (78);
whereby a fluid flow pulse through the valve (78) is established each time the apertures (100, 116) overlap each other
**characterized** by
means (144, 148, 152) for defining a fluid chamber (156) on a side of one of the members; and
fluid flow diode means (160) in fluid communication with the chamber (156) and defining a fluid outlet (132) therefrom for promoting the flow of fluid from the chamber (156) interposed between said apertures (100, 116) and said diode means (160)
through the outlet (132) and for inhibiting the flow of fluid through the outlet (132) into the chamber (156), whereby
a fluid backflow through the outlet (132) into the chamber (156) is inhibited when the apertures (100, 116) are not in an overlapping position.

2. A valve according to claim 1 further comprising:
means (600) for detecting the frequency of fluid flow pulses through the valve (78);
means (604) for prescribing a frequency of fluid flow pulses through the valve (78); and
means (602, 606), responsive to the detecting means and the prescribing means, for adjusting the relative rotational speed of the valve members (96, 109) so that the detected frequency substantially equals the prescribed frequency.

3. A valve according to claim 1 or 2 in which said first member is an outer sleeve (96) and said second member is a rotatable intermediate sleeve (109) disposed coaxially within the outer sleeve and having a radially oriented aperture being generally aligned with the outer sleeve aperture when the intermediate sleeve is in a prescribed rotational position;
means (104, 110, 111) coupled to the intermediate sleeve (109) for rotating the intermediate sleeve (109) within the outer sleeve (96); and
an inner sleeve (120) disposed coaxially within the intermediate sleeve (109), defining said chamber (156) within an upstream end and a downstream end, and having a radially oriented aperture (122) being generally aligned with the outer sleeve aperture; and
means for sealing the upstream end of the inner sleeve so that a fluid medium exiting the chamber flows through the downstream end thereof.

4. A valve as in claim 3 wherein said fluid flow diode means (160) has an inlet end in fluid communication with the downstream end of the chamber (156) and an outlet end for the discharge of the fluid from the diode means (160), the diode means including means (164, 168) for impeding a fluid flow from the outlet end towards the inlet end to a greater extent than a fluid flow from the inlet end towards to the outlet end.

5. A valve as in claim 4 wherein the diode means comprises:
an outer portion (136, 164); and
an inner portion (168, 140) disposed coaxially within and radially spaced from the outer portion (136, 164) and forming an annular passage, the means (164, 168) for impeding the fluid flow being disposed in the annular passage.

6. A valve according to claim 5 wherein the portions have surfaces (164, 168) defining the annular passage and wherein the diode means (160) is defined by at least one of the surfaces.

7. A valve according to claim 6 wherein the surface includes a section deflecting a portion of the fluid flow from the outlet toward the inlet in a direction other than the direction of the remainder of the fluid flow from the outlet toward the inlet.

8. A valve according to claim 7 wherein the surface section comprises a wave-shaped surface.

9. A valve according to claim 8 wherein the surface opposite the wave-shaped surface comprises a scalloped-shaped surface.

10. A valve as in claim 5 including a cooling chamber (170) disposed in the inner portion (140).

11. A valve as in claim 10 further comprising:
means (174) for flowing a fluid into the cooling chamber (170); and
means (178) for flowing the fluid out from the cooling chamber (170), so that the fluid flowing from the chamber (170) cools the valve (78).

12. A valve as in claim 3 further comprising means (128, 184) for substantially hermetically sealing the intermediate sleeve rotating means (104, 110, 111).

13. A valve as in claim 12 wherein the hermetically sealing means (128, 184) includes means (184) for accommodating expansion of the intermediate sleeve rotating means.

14. A valve as in claim 3 further comprising means (182) for flowing a fluid through an annulus defined by an inner surface of the outer sleeve (96) and an outer surface of the intermediate sleeve (109).

15. A valve as in claim 3 wherein the outer sleeve aperture (100) includes means (125) for effecting a prescribed fluid flow rate into the chamber (156) by varying the valve coefficient as the intermediate sleeve aperture (116) passes into and out of alignment with the outer sleeve aperture (100).

16. A valve as in claim 3 wherein the intermediate sleeve aperture (110) includes means (126) for effecting a prescribed fluid flow rate into the chamber (156) by varying the valve coefficient as the intermediate sleeve aperture (116) passes into and out of alignment with the outer sleeve aperture (100).

17. A valve as in claim 3 wherein the inner sleeve aperture includes means (127) for effecting a prescribed fluid flow rate into the chamber (156) by varying the valve coefficient as the intermediate sleeve aperture (116) passes into and out of alignment with the outer sleeve aperture (100).

18. A valve according to claim 1 including a third valve member (120) coaxial with and in close proximity to the second member and wherein the second member (109) is a rotatable relative to the first and third member, the third member having an aperture (122) positioned in substantial alignment with the aperture (116) in the first member.

19. A valve according to claim 1 wherein the members (96, 109, 120) have a cylindrical configuration and wherein the chamber is radially inward of the second member.

## Patentansprüche

1. Ein Ventil (78) zur Erzeugung von Fluidströmungspulsen hoher Frequenz in einer Stromabwärtsrichtung mit:
ersten und zweiten koaxial angebrachten Ventilbauteilen (96, 109), die eng beieinanderliegen und ausgelegt sind, relativ zueinander zu rotieren, wobei jedes Bauteil eine Öffnung (100, 116) für die Strömung von Fluid dorthindurch aufweist und die Öffnungen so angeordnet sind, daß sie sich in und außer Deckung während einer relativen Drehung der Bauteile bewegen und einen Fluideinlaß des Ventils (78) definieren, wodurch ein Fluidströmungspuls durch das Ventil (78) jedesmal dann errichtet wird, wenn sich die Öffnungen (100, 116) überlappen,
**gekennzeichnet durch**
Mittel (144, 148, 152), die eine Fluidkammer (156) auf einer Seite eines der Bauteile definieren, und
Fluidströmungsdiodenmittel (160), die in Fluidverbindung mit der Kammer (156) stehen und einen Fluidauslaß (132) von dort definieren, um die Strömung von Fluid aus der Kammer (156), die zwischen den Öffnungen (100, 116) und den Diodenmitteln (160) angeordnet ist, durch den Auslaß (132) zu fördern und die Strömung von Fluid durch den Auslaß (132) in die Kammer (156) hinein zu hemmen, wodurch eine Fluidrückströmung durch den Auslaß (132) in die Kammer (156) hinein gehemmt ist, wenn sich die Öffnungen (100, 116) nicht in einer Überlappungsposition befinden.

2. Ein Ventil nach Anspruch 1, welches weiter umfaßt:
Mittel (600) zum Ermitteln der Frequenz von Fluidströmungspulsen durch das Ventil (78),
Mittel (604) zum Vorschreiben einer Frequenz von Fluidströmungspulsen durch das Ventil (78), und
Mittel (602, 606), die auf die Ermittlungsmittel und die Vorschreibemittel ansprechen, um die relative Rotationsgeschwindigkeit der Ventilbauteile (96, 109) einzustellen, so daß die ermittelte Frequenz im wesentlichen gleich der vorgeschriebenen Frequenz ist.

3. Ein Ventil nach Anspruch 1 oder 2,
bei welchem das erste Bauteil eine äußere Hülse (96) und das zweite Bauteil eine drehbare Zwischenhülse (109) ist, die koaxial innerhalb der äußeren Hülse angeordnet ist und eine radial orientierte Öffnung aufweist, die im allgemeinen mit der äußeren Hülsenöffnung ausgerichtet ist, wenn sich die Zwischenhülse in einer vorgeschriebenen Drehposition befindet, und mit
Mitteln (104, 110, 111), die an die Zwischenhülse (109) gekoppelt sind, um die Zwischenhülse (109) innerhalb der äußeren Hülse (96) zu drehen,
einer inneren Hülse (120), die koaxial innerhalb der Zwischenhülse (109) angeordnet ist, die Kammer (156) innerhalb eines Stromaufwärtsendes und eines Stromabwärtsendes definiert und eine radial orientierte Öffnung (122) aufweist, die im allgemeinen mit der äußeren Hülsenöffnung ausgerichtet ist, und
Mitteln zum Abdichten des Stromaufwärtsendes der inneren Hülse, so daß ein aus der Kammer austretendes Fluidmedium durch deren Stromabwärtsende strömt.

4. Ein Ventil wie in Anspruch 3,
bei welchem das Fluidströmungsdiodenmittel (160) ein Einlaßende, das in Fluidverbindung mit dem Stromabwärtsende der Kammer (156) steht, und ein Auslaßende zum Entladen des Fluids aus dem Diodenmittel (160) aufweist, wobei das Diodenmittel Mittel (164, 168) umfaßt, um eine Fluidströmung vom Auslaßende zum Einlaßende in einem größeren Ausmaß zu behindern als eine Fluidströmung vom Einlaß zum Auslaßende.

5. Ein Ventil wie in Anspruch 4, bei welchem das Diodenmittel umfaßt:
einen äußeren Teil (136, 164) und
einen inneren Teil (168, 140), der koaxial innerhalb des äußeren Teils (136, 164) sowie radial von diesem beabstandet angeordnet ist und einen ringförmigen Durchgang bildet, wobei die Mittel (164, 168) zum Behindern der Fluidströmung im ringförmigen Durchgang angeordnet sind.

6. Ein Ventil nach Anspruch 5,
bei welchem die Teile Oberflächen (164, 168) aufweisen, welche den ringförmigen Durchgang definieren, und bei welchem das Diodenmittel (160) durch wenigstens eine der Oberflächen definiert ist.

7. Ein Ventil nach Anspruch 6,
bei welchem die Oberfläche einen Abschnitt umfaßt, der einen Teil der Fluidströmung vom Auslaß zum Einlaß in einer Richtung ablenkt, die sich von der Richtung der übrigen Fluidströmung vom Auslaß zum Einlaß unterscheidet.

8. Ein Ventil nach Anspruch 7,
bei welchem der Oberflächenabschnitt eine wellenförmige Oberfläche umfaßt.

9. Ein Ventil nach Anspruch 8,
bei welchem die Oberfläche gegenüber der wellenförmigen Oberfläche eine bogenförmige Oberfläche umfaßt.

10. Ein Ventil wie in Anspruch 5,
welches eine Kühlkammer (170) umfaßt, die im inneren Teil (140) angeordnet ist.

11. Ein Ventil wie in Anspruch 10, welches weiter umfaßt:
Mittel (174), um ein Fluid in die Kühlkammer (170) hinein strömen zu lassen, und
Mittel (178), um das Fluid aus der Kühlkammer (170) heraus strömen zu lassen, so daß das aus der Kammer (170) strömende Fluid das Ventil (78) kühlt.

12. Ein Ventil wie in Anspruch 3,
welches weiter Mittel (128, 184) umfaßt, welche die Zwischenhülsendrehmittel (104, 110, 111) im wesentlichen hermetisch abdichten.

13. Ein Ventil wie in Anspruch 12,
bei welchem das Mittel (128, 184) zum hermetischen Abdichten Mittel (184) umfaßt, welche die Ausdehnung der Zwischenhülsendrehmittel aufnehmen.

14. Ein Ventil wie in Anspruch 3,
welches weiter Mittel (182) umfaßt, welche ein Fluid durch einen Ring strömen lassen, der durch eine innere Oberfläche der äußeren Hülse (96) und eine äußere Oberfläche der Zwischenhülse (109) definiert ist.

15. Ein Ventil wie in Anspruch 3,
bei welchem die äußere Hülsenöffnung (100) Mittel (125) umfaßt, welche eine vorgeschriebene Fluidströmungsrate in die Kammer (156) hinein durch Variieren des Ventilkoeffizienten bewirken, wenn die Zwischenhülsenöffnung (116) in und außer Ausrichtung mit der äußeren Hülsenöffnung (100) gelangt.

16. Ein Ventil wie in Anspruch 3,
bei welchem die Zwischenhülsenöffnung (110) Mittel (126) umfaßt, welche eine vorgeschriebene Fluidströmungsrate in die Kammer (156) hinein durch Variieren des Ventilkoeffizienten bewirken, wenn die Zwischenhülsenöffnung (116) in und außer Ausrichtung mit der äußeren Hülsenöffnung (100) gelangt.

17. Ein Ventil wie in Anspruch 3,
bei welchem die innere Hülsenöffnung Mittel (127) umfaßt, welche eine vorgeschriebene Fluidströmungsrate in die Kammer (156) hinein durch Variieren des Ventilkoeffizienten bewirken, wenn die Zwischenhülsenöffnung (116) in und außer Ausrichtung mit der äußeren Hülsenöffnung (100) gelangt.

18. Ein Ventil nach Anspruch 1,
mit einem dritten Ventilbauteil (120), das koaxial zum zweiten Bauteil und in enger Nachbarschaft zu diesem vorgesehen ist, und bei welchem das zweite Bauteil (109) relativ zum ersten und dritten Bauteil drehbar ist, wobei das dritte Bauteil eine Öffnung (122) aufweist, die in wesentlicher Ausrichtung mit der Öffnung (116) im ersten Bauteil positioniert ist.

19. Ein Ventil nach Anspruch 1,
bei welchem die Bauteile (96, 109, 120) eine zylindrische Konfiguration aufweisen, und bei welchem sich die Kammer radial innen bezüglich des zweiten Bauteils befindet.

## Revendications

1. Soupape (78) pour engendrer des impulsions à haute fréquence dans l'écoulement d'un fluide dans une direction vers l'aval, comprenant :
un premier et un second élément de soupape (96, 109) montés coaxialement à proximité étroite et adaptés à tourner l'un par rapport à l'autre, chaque élément comportant une ouverture (100, 116) pour l'écoulement du fluide qui le traverse, les ouvertures étant agencées de telle manière qu'elles se déplacent pour venir en correspondance ou hors de correspondance pendant la rotation relative des éléments et définissent une entrée de fluide de la soupape (78) ;
grâce à quoi il s'établit une impulsion dans l'écoulement du fluide à travers la soupape (78) chaque fois que les ouvertures (100, 116) se chevauchent mutuellement,
caractérisé par des moyens (144, 148, 152) pour définir une chambre à fluide (156) sur un côté de l'un des éléments ; et par des moyens formant diode (160) vis-à-vis de l'écoulement du fluide, en communication avec la chambre (156) et définissant une sortie de fluide (132) depuis ladite chambre, afin de promouvoir l'écoulement du fluide depuis la chambre (156) et interposés entre lesdites ouvertures (100, 116) et lesdits moyens formant diode (160) à travers la sortie (132), et pour empêcher l'écoulement de fluide à travers la sortie (132) vers l'intérieur de la chambre (156), grâce à quoi on empêche un écoulement de fluide en retour à travers la sortie (132) vers la chambre (156) lorsque les ouvertures (100, 116) ne sont pas dans une position de chevauchement.

2. Soupape selon la revendication 1, comprenant en outre :
- des moyens (600) pour détecter la fréquence des impulsions dans l'écoulement de fluide à travers la soupape (78) ;
- des moyens (604) pour imposer une fréquence aux impulsions dans l'écoulement de fluide à travers la soupape (78) ; et
- des moyens (602, 606), réagissant aux moyens de détection et aux moyens d'imposition pour ajuster la vitesse de rotation relative des éléments de soupape (96, 109), de telle sorte que la fréquence détectée est sensiblement égale à la fréquence imposée.

3. Soupape selon l'une ou l'autre des revendications 1 et 2, dans laquelle ledit premier élément est un manchon extérieur (96), et ledit second élément est un manchon intermédiaire rotatif (109) disposé coaxialement à l'intérieur du manchon extérieur et comportant une ouverture orientée radialement, qui est généralement alignée avec l'ouverture du manchon extérieur lorsque le manchon intermédiaire est dans une position prescrite en rotation ;
des moyens (104, 110, 111) accouplés au manchon intermédiaire (109) pour faire tourner le manchon intermédiaire (109) à l'intérieur du manchon extérieur (96) ; et
un manchon intérieur (120) disposé coaxialement à l'intérieur du manchon intermédiaire (109), définissant ladite chambre (156) à l'intérieur d'une extrémité amont et d'une extrémité aval, et comportant une ouverture radialement orientée (122), qui est généralement alignée avec l'ouverture du manchon extérieur ; et
des moyens pour refermer de manière étanche l'extrémité amont du manchon intérieur, de sorte qu'un milieu fluide qui sort de la chambre s'écoule à travers l'extrémité aval de celle-ci.

4. Soupape selon la revendication 3, dans laquelle lesdits moyens formant diode (160) vis-à-vis de l'écoulement du fluide comportent une extrémité d'entrée en communication avec l'extrémité aval de la chambre (156), et une extrémité de sortie pour l'échappement du fluide depuis les moyens formant diode (160), les moyens formant diode comprenant des moyens (164, 168) pour empêcher un écoulement de fluide depuis l'extrémité de sortie en direction de l'extrémité d'entrée dans une mesure supérieure à un écoulement de fluide depuis l'extrémité d'entrée vers l'extrémité de sortie.

5. Soupape selon la revendication 4, dans laquelle les moyens formant diode comprennent :
une partie extérieure (136, 164) ; et
une partie intérieure (166, 140) disposée coaxialement à l'intérieur de la partie extérieure (136, 164) et espacée radialement de cette dernière, et formant un passage annulaire, les moyens (164, 168) pour empêcher l'écoulement de fluide étant disposés dans le passage annulaire.

6. Soupape selon la revendication 5, dans laquelle les parties présentent des surfaces (164, 168) qui définissent le passage annulaire, et dans laquelle les moyens formant diode (160) sont définis par l'une au moins des surfaces.

7. Soupape selon la revendication 6, dans laquelle la surface comprend un tronçon qui dévie une partie de l'écoulement de fluide depuis la sortie vers l'entrée dans une direction autre que la direction du reste de l'écoulement du fluide depuis la sortie vers l'entrée.

8. Soupape selon la revendication 7, dans laquelle le tronçon de surface comprend une surface de forme ondulée.

9. Soupape selon la revendication 8, dans laquelle la surface à l'opposé de la surface de forme ondulée comprend une surface de forme échancrée.

10. Soupape selon la revendication 5, comprenant une chambre de refroidissement (170) disposée dans la partie intérieure (140).

11. Soupape selon la revendication 10, comprenant en outre :
des moyens (174) pour amener un fluide à s'écouler à l'intérieur de la chambre de refroidissement (170) ; et
des moyens (178) pour amener le fluide à s'écouler hors de la chambre de refroidissement (170), de sorte que le fluide s'écoulant depuis la chambre (170) refroidit la soupape (78).

12. Soupape selon la revendication 3, comprenant en outre des moyens (128, 184) pour refermer de manière sensiblement hermétique les moyens de rotation du manchon intermédiaire (104, 110, 111).

13. Soupape selon la revendication 12, dans laquelle les moyens assurant une fermeture hermétique (128, 184) comprennent des moyens (184) pour encaisser la dilatation des moyens assurant la rotation du manchon intermédiaire.

14. Soupape selon la revendication 3, comprenant en outre des moyens (182) pour amener un fluide à s'écouler à travers un anneau défini par une surface intérieure du manchon extérieur (96) et par une surface extérieure du manchon intermédiaire (109).

15. Soupape selon la revendication 3, dans laquelle l'ouverture du manchon extérieur (100) comprend des moyens (125) pour assurer un débit de fluide prescrit vers l'intérieur de la chambre (156) en faisant varier le coefficient de soupape tandis que l'ouverture (116) du manchon intermédiaire passe en alignement et hors d'alignement avec l'ouverture (100) du manchon extérieur.

16. Soupape selon la revendication 3, dans laquelle l'ouverture (110) du manchon intermédiaire comprend des moyens (126) pour imposer un débit de fluide prescrit à l'intérieur de la chambre (156) en faisant varier le coefficient de soupape tandis que l'ouverture (116) du manchon intermédiaire passe en alignement et hors d'alignement avec l'ouverture (100) du manchon extérieur.

17. Soupape selon la revendication 3, dans laquelle l'ouverture du manchon intérieur comprend des moyens (127) pour imposer un débit de fluide prescrit à l'intérieur de la chambre (156) en faisant varier le coefficient de soupape tandis que l'ouverture (116) du manchon intermédiaire passe en alignement et hors d'alignement avec l'ouverture (100) du manchon extérieur.

18. Soupape selon la revendication 1, comprenant un troisième élément de soupape (120) coaxial au second élément de soupape et à proximité étroite de celui-ci, et dans lequel le second élément de soupape (109) est capable de tourner par rapport au premier et au troisième élément de soupape, le troisième élément de soupape présentant une ouverture (122) placée sensiblement en alignement avec l'ouverture (116) dans le premier élément de soupape.

19. Soupape selon la revendication 1, dans laquelle les éléments de soupape (96, 109, 120) ont une configuration cylindrique, et dans laquelle la chambre est radialement à l'intérieur du second élément de soupape.
